(19) Europäisches Patentamt
European Patent Office
Office européen des brevets

(11) Veröffentlichungsnummer: **0 002 431 B2**

(12) # NEUE EUROPÄISCHE PATENTSCHRIFT

(45) Veröffentlichungstag der neuen Patentschrift: **20.03.85**

(51) Int. Cl.⁴: **C 08 G 69/36**, C 08 J 5/18, A 01 K 91/00

(21) Anmeldenummer: **78100349.6**

(22) Anmeldetag: **11.07.78**

(54) **Transparente Polyamide und deren Verwendung zur Herstellung von Formkörpern.**

(30) Priorität: **01.12.77 DE 2753577**

(43) Veröffentlichungstag der Anmeldung: **27.06.79 Patentblatt 79/13**

(45) Bekanntmachung des Hinweises auf die Patenterteilung: **25.03.81 Patentblatt 81/12**

(45) Bekanntmachung des Hinweises auf die Entscheidung über den Einspruch: **20.03.85 Patentblatt 85/12**

(84) Benannte Vertragsstaaten: **DE FR GB**

(56) Entgegenhaltungen:
**FR - A - 1 559 208**

**CHEMICAL ABSTRACTS, Vol. 78, Nr. 18, 7. Mai 1973 Columbus, Ohio, USA BRDUKOWSKA BARBARA et al., "Modified polyamide lacquer", Seite 75, Zusammenfassung Nr. 112757u**
**JACS, 75 (1953), p. 1238-1239 Alicyclic Diamines. Polyadipamides of Bis-(4-aminocyclohexyl)methane by A.E. Barkdoll**
**Macromolecules 4 (1971), p. 347-350 The effect of isomer ratio on the Properties of Bis (4-aminocyclohexyl)methane polyamides by F.R. Prince**

(73) Patentinhaber: **BAYER AG, Konzernverwaltung RP Patentabteilung, D-5090 Leverkusen 1 Bayerwerk (DE)**

(72) Erfinder: **Meyer, Rolf-Volker, Dr., Bodelschwinghstrasse 12, D-4150 Krefeld (DE)**
Erfinder: **Dhein, Rolf, Dr., Deswatinesstrasse 30, D-4150 Krefeld (DE)**
Erfinder: **Rudolph, Hans, Dr., Haydnstrasse 9, D-4150 Krefeld (DE)**

EP 0 002 431 B2

**Beschreibung**

Es ist bekannt, die Kristallinität von Polyamiden wie 6-Polyamid oder 6,6-Polyamid durch Einbau von Comonomeren zu verringern und damit die Eigenschaften der Homopolyamide zu modifizieren.

So kann z.B. die Transparenz der Polyamide verbessert, das Zähigkeitsniveau erhöht, die Schmelzviskosität verändert und damit das Verarbeitungsverhalten der Produkte variiert werden.

Als modifizierende Monomere sind dabei verschiedene Dicarbonsäuren, insbesondere aliphatische Dicarbonsäuren mit 6 bis 12 C-Atomen oder aromat. Dicarbonsäuren mit mindestens 8 C-Atomen, vorzugsweise Isophthalsäure und Terephthalsäure prinzipiell geeignet.

Als Diamine eignen sich vorzugsweise ggf. verzweigte aliphat. Diamine mit mindestens 6 C-Atomen in der längsten C-Kette, araliphat. oder auch cycloaliphat. Diamine. Cycloaliphat. Diamine werden insbesondere zur Erzielung höherer Erstarrungswerte, verbesserter Wärmeformbeständigkeit und Transparenz bei der Polykondensation mitverwendet.

Neben 3-Aminomethyl-3,3,5-trimethyl-1-cyclohexylamin und Bisaminomethylcyclohexanen werden bevorzugt auch 4,4'-Diaminodicyclohexylmethane eingesetzt.

So werden gemäss der DE-OS Nr. 2159803 transparente, thermoplastisch verarbeitbare Polyamide aus Isophthalsäure, 4,4'-Diaminodicyclohexylmethan und Caprolactam erhalten, die sich für die Herstellung von Formkörpern und Folien eignen. Nachteilig bei der Herstellung dieser Polyamide wirkt sich aber aus, dass der Einsatz von reinem 4,4'-Diaminocyclohexylmethan vorgeschrieben wird, obwohl auch die weiteren stellungsisomeren Diaminodicyclohexylmethane, wie z.B. 2,4'-Diaminodicyclohexylmethan und 2,2'-Diaminodicyclohexylmethan, bei der Produktion der Diaminokomponente anfallen. So muss nämlich in der Regel zur Herstellung reiner 4,4'-Diaminodicyclohexylmethane aus Diaminodiphenylmethanen technischer Qualität eine das Produkt verteuernde zusätzliche Feindestillation vor der Hydrierung durchgeführt, oder aber ein spezielles Herstellverfahren für 4,4'-Diaminodiphenylmethane gewählt werden. Ausserdem entstehen bei vielen Verfahrensweisen Isomerengemische, die neben isomeren Diaminodiphenylmethanen auch höherfunktionelle Anteile, vorzugsweise Tricyclohexyltriaminverbindungen enthalten.

Überraschend wurde nun gefunden, dass man bei der Herstellung von Polyamiden unter Verwendung von Aminkomponenten, die neben 4,4'-Diaminodicyclohexylmethan 5 bis 25 Mol-% 2,4'-Isomere, 0 bis 2, vorzugsweise 0 bis 1 Mol-%, 2,2'-Isomere und ggf. bis zu 10 Mol-% Bis(aminocyclohexylmethyl)cyclohexylamine enthalten, nicht nur keine Verschlechterung der Eigenschaften, wie z.B. Transparenz oder Verarbeitbarkeit der Polyamide, beobachtet, sondern sogar Verbesserung dieser Eigenschaften erzielt werden kann.

Gegenstand der Erfindung sind daher Copolyamide, erhalten durch Polykondensation von

I. 10 bis 98 Gew.-% eines Lactams mit wenigstens 5 C-Atomen im Ring bzw. einer entsprechenden Aminocarbonsäure, und

II. 2 bis 90 Gew.-% äquivalenter Mengen

a) einer aliphat. Dicarbonsäure mit $C_2$ bis $C_{20}$ und/oder einer aromat. Dicarbonsäure mit $C_8$ bis $C_{20}$, und

b) eines Gemisches von Polyaminopolycyclohexylmethanverbindungen, das sich zusammensetzt aus

α) 75 bis 95 Mol-% 4,4'-Diaminodicyclohexylmethanen,

β) 5 bis 25 Mol-% 2,4'-Diaminodicyclohexylmethanen,

γ) 0 bis 2 Mol-%, bevorzugt 0 bis 1 Mol-%, 2,2'-Diaminodicyclohexylmethan, und

δ) 0 bis 10 Mol-%, bevorzugt 0 bis 5 Mol-%, von Triaminen der allgemeinen Formel A

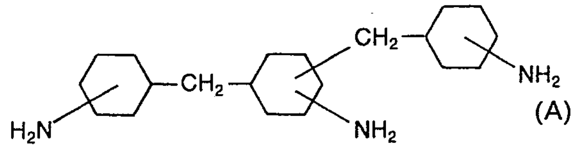

(A)

wobei das Polyamino/Polycyclohexylmethan-Gemisch bis zu 20 Gew.-% durch aliphat. Diamine mit $C_2$ bis $C_{20}$ durch cycloaliphat. Diamine mit $C_6$ bis $C_{15}$, die von den Diaminen der Komponenten II b verschieden sind, oder durch araliphat. Diamine mit $C_7$ bis $C_{20}$ ersetzt werden kann und wobei die Summe aus I und II immer 100 Gew.-% und die Summe aus α bos δ immer 100 Mol-% sein muss.

Besonders bevorzugt sind Polyamide, die durch Polykondensation von 30 bis 45 Gew.-% der Komponenten I und 70 bis 55 Gew.-% der Komponenten II erhalten werden, da sich diese Produkte besonders gut thermoplastisch verarbeiten lassen und transparente Polyamide auch in dicken Schichten ergeben. Ebenso zeichnen sich besonders Polyamide aus, die durch Polykondensation von 60 bis 98 Gew.-% der Komponenten I und 40 bis 2 Gew.-% der Komponenten II erhalten werden, da sie sich besonders zur Herstellung transparenter Verbundfolien mit Polyäthylen eignen.

Als Aminocarbonsäuren können solche mit 5 bis 20 C-Atomen, ggf. in Form der entsprechenden Lactame, eingesetzt werden. Vorzugsweise werden ε-Aminocapronsäure bzw. ε-Caprolactam, Aminoundecansäure und Laurinlactam sowie Gemische dieser Komponenten zur Herstellung der erfindungsgemässen Polyamide mitverwendet.

Die zur Herstellung der erfindungsgemässen Copolyamide verwendbaren Gemische der Polyaminopolycyclohexylmethanverbindungen lassen sich in einfacher Weise aus Anilin und Formaldehyd und anschliessender Hydrierung der aromatischen Mehrkernpolyamine gewinnen.

Die Stellungsisomeren des Diamino/Dicyclohexylmethan-Gemisches bestehen ihrerseits aus trans, trans-, cis, trans- und zu einem geringen Anteil aus cis, cis-Isomeren.

Das erfindungsgemäss einzusetzende Amingemisch kann einen Schmelzpunkt von ca. 30 °C haben. Bei einem Anteil der 4,4'-Isomeren unter 90% kann das Gemisch jedoch auch bei Raumtemperatur flüssig sein.

Die Aminokomponente II b kann bis zu 20 Gew.-% durch aliphat. Diamine mit $C_2$ bis $C_{20}$, vorzugsweise Hexamethylendiamin, durch cycloaliphat. Diamine mit $C_6$ bis $C_{15}$, die von den Diaminen der Komponenten b verschieden sind, vorzugsweise 1,3-, 1,4-Bisaminomethylcyclohexan, Dimethylamino(tricyclodecane) oder Isophorondiamin, oder durch araliphat. Diamine mit $C_7$ bis $C_{20}$, vorzugsweise m- und p-Xylylendiamin, 2,5-Dimethyl-p-xylylendiamin oder 2,4-Dimethyl-m-xylylendiamin ersetzt werden.

Als aliphat. oder cycloaliphat. Dicarbonsäuren werden solche mit bis zu 20 C-Atomen eingesetzt; vor allem eignen sich als aliphat. Dicarbonsäuren Verbindungen der allgemeinen Formel

$$HOOC-(CH_2)_m-COOH$$

wobei m eine ganze Zahl von 4 bis 10 bedeutet, als cycloaliphat. Dicarbonsäuren die stereoisomeren 1,3-Cyclopentandicarbonsäuren, 1,3- und 1,4-Cyclohexandicarbonsäure und 4,4'-Dicyclohexyldicarbonsäuren. Insbesondere eignen sich Adipinsäure und Azelainsäure.

Als aromatische Dicarbonsäuren werden solche mit 7 bis 20, vorzugsweise 8 bis 15 C-Atomen, z.B. einkernige Dicarbonsäuren der Benzolreihe, wie 3,5-Pyridindicarbonsäure, 1,4-, 1,5- und andere Naphthalindicarbonsäuren, 4,4'-Diphenyldicarbonsäure, Diphenylsulfondicarbonsäuren und Benzophenondicarbonsäuren, vorzugsweise Terephthalsäure und Isophthalsäure, eingesetzt.

Es können auch Gemische der genannten Dicarbonsäuren verwendet werden.

Die erfindungsgemässen Copolyamide lassen sich in bekannter Weise durch Schmelzkondensation herstellen.

Man gibt das Diamingemisch und die Dicarbonsäuren in stöchiometrischen Mengen oder in annähernd stöchiometrischen Mengen, evtl. unter Zusatz von Wasser und/oder Essigsäure oder auch die Salze aus den Diaminen und den Dicarbonsäuren und die Aminocarbonsäuren oder die entsprechenden Lactame in einen Rührautoklaven, schmilzt auf, lässt nach einiger Zeit den Wasserdampf ab, rührt einige Zeit lang im Inertgasstrom und kondensiert dann ggf. unter Vakuum weiter, bis das gewünschte Molekulargewicht erreicht ist.

Die Copolyamide sind transparent und lassen sich ohne Schwierigkeiten thermoplastisch auf den üblichen Formgebungsapparaturen verarbeiten. Sie können Hilfsmittel und Zusatzstoffe enthalten, beispielsweise Gleitmittel, Entformungsmittel, Farbstoffe, Glasfasern, Füllstoffe, Brandschutzmittel. Die Copolyamide dienen zur Herstellung von transparenten Formkörpern jeder Art, insbesondere von Folien und Angeldrähten.

In den nachstehenden Beispielen wird die Viskosität in einer 1%igen Lösung in m-Kresol bei 25 °C gemessen.

*Beispiel 1*

Man füllt 2,4 kg ε-Caprolactam (32% bezogen auf das Polyamid), 2,49 kg (15 mol) Isophthalsäure und 3,15 kg (15 mol) des zusammen mit 2 l Wasser in einen Autoklaven (Vol. 12 l). Zur Molgewichtsstabilisierung werden 20 g Benzoesäure und zum Ausgleich während der Polykondensation auftretender Diaminverluste 30 g hydriertes Diaminodiphenylmethan I hinzugefügt.

Man heizt unter $N_2$-Atmosphäre auf ca. 200 °C auf, wobei bei 100 °C das Rührwerk eingeschaltet wird, und hält das Reaktionsgemisch 4 h unter Eigendruck. Dann wird langsam entspannt, auf 270 °C erhitzt und noch 7 h bei 270 °C polykondensiert.

Das entstandene transparente Polyamid ($\eta_{rel}{}^{24}$) wird durch ein Wasserbad abgesponnen, granuliert und getrocknet.

An Normkleinstäben wird gemäss DIN 53460 eine Wärmeformbeständigkeit nach Vicat (Methode B) von 149 °C, nach DIN 53453 eine Kerbschlagzähigkeit von 5,2 kJ/cm², eine Biegefestigkeit von 162 MPa (DIN 53452) gemessen. Die Prüfung auf Schlagzähigkeit (DIN 53453) ergab bei 10 Proben keinen Bruch.

Zusammensetzung des Gemisches von Polyaminopolycyclohexylmethanverbindungen A

94,7 Mol-% 4,4'-Diaminodicyclohexylmethane,
5,1 Mol-% 2,4'-Diaminodicyclohexylmethane,
0,2 Mol-% 2,2'-Diaminodicyclohexylmethane.

*Beispiel 2*

Man füllt 3,14 kg ε-Caprolactam (38% bezogen auf das Polyamid), 2,49 kg (15 mol) Isophthalsäure und 3,15 kg (15 mol) des Gemisches von Polyaminopolycyclohexylmethanverbindungen A, wie in Beispiel 1 beschrieben, in den Autoklaven und polykondensiert die Monomermischung analog Beispiel 1.

Das entstandene, fast farblose transparente Polyamid hat eine relative Viskosität von 2,3, eine Wärmeformbeständigkeit nach Vicat (Methode B) von 140 °C, eine Biegefestigkeit von 162 MPa und eine Kerbschlagzähigkeit von 5,8 kJ/m². Die Prüfung auf Schlagzähigkeit ergab bei 10 Proben keinen Bruch.

*Vergleichsversuch A*

Beispiel 1 wird wiederholt mit dem Unterschied, dass anstelle des Gemisches von Polyaminopolycyclohexylmethanverbindungen A 4,4'-Diaminodicyclohexylmethan (Stereoisomerengemisch mit einem Schmelzpunkt von ca. 35 °C) eingesetzt wird. Das erhaltene Polyamid hat eine rel. Viskosität von 2,1, eine Biegefestigkeit von 155 MPa und eine Kerbschlagzähigkeit von lediglich 3,8 kJ/m².

Auf herkömmlichen Spritzgussmaschinen ist das Material weniger gut zu verarbeiten als das höhermolekulare, nach Beispiel 1 erhaltene Produkt.

*Beispiel 3*

9,04 kg (80 mol) ε-Caprolactam, 0,7 kg (3,33 mol) des Gemisches von Polyaminopolycyclohexylmethanverbindungen A und 0,52 kg (3,2 mol) Isophthalsäure werden unter Stickstoffatmosphäre in einen Autoklaven eingefüllt, in 3 h auf 270 °C erhitzt und 7 h bei 270 °C polykondensiert.

Das erhaltene Produkt wird durch ein Wasserbad abgesponnen und gehäckselt. Nach Extraktion des Monomergehalts und Trocknung erhält man ein transparentes Granulat mit einer rel. Viskosität von 3,1. Das Produkt lässt sich gut verstrecken und zu hochtransparenten, brillant glänzenden Angelschnüren verarbeiten.

*Beispiel 4*

9,04 kg (80 mol) ε-Caprolactam, 0,7 kg (3,33 mol) des Gemisches von Polyaminopolycyclohexylmethanverbindungen A und 0,6 kg (3,2 mol) Azelainsäure werden, wie in Beispiel 3 beschrieben, zu einem Polyamid kondensiert. Nach Extraktion des Monomeranteils und Trocknung erhält man ein transparentes Granulat mit einer rel. Viskosität von 3,0. Das Produkt lässt sich gut verstrecken und zu hochtransparenten, brillant glänzenden Angelschnüren verarbeiten.

*Beispiel 5*

Beispiel 4 wird wiederholt mit dem Unterschied, dass anstelle des Gemisches von Polyaminopolycyclohexylmethanverbindungen A als Aminkomponente ein Gemisch von Polyaminocyclohexylmethanverbindungen B eingesetzt wird, das folgende Zusammensetzung hat

90,9 Mol-% 4,4'-Diaminodicyclohexylmethane,
4,9 Mol-% 2,4'-Diaminodicyclohexylmethane,
0,2 Mol-% 2,2'-Diaminodicyclohexylmethane,
4,0 Mol-% 2,4-Bis-(4-aminocyclohexylmethyl)cyclohexylamine.

Nach Extraktion des Monomeranteils und Trocknung erhält man ein transparentes Granulat mit einer rel. Viskosität von 3,5. Das Produkt lässt sich ebenfalls sehr gut verstrecken und zu hochwertigen Angelschnüren verarbeiten.

*Beispiel 6*

9,95 kg (85 mol) ε-Caprolactam, 0,22 kg (1 mol) des Gemisches von Polyaminopolycyclohexylmethanverbindungen A und 0,16 kg (950 mmol) Isophthalsäure werden unter Rühren in einer Stickstoffatmosphäre zunächst 1 h bei 200 °C, dann nach 7 h bei 270 °C polykondensiert. Das Copolyamid wird als Borste in ein Wasserbad abgesponnen, gehäckselt, mit Wasser von 95 °C extrahiert und getrocknet.

Die rel. Viskosität des in dünnen Schichten (bis ca. 100 mm) transparenten Produktes beträgt 3,2.

Das erhaltene Polyamid kann auf einer handelsüblichen Dreischichtblasanlage mit Polyäthylen von einer Dichte von ca. 0,92 und einem Schmelzindex von 0,3 bis 0,5 unter Verwendung von z.B. Surlyn A 1652 als Haftvermittler zu einer hochwertigen Verbundfolie coextrudiert werden.

Die Verbundfolie zeichnet sich durch hohe Transparenz, brillanten Oberflächenglanz und hervorragende Tiefziehfähigkeit aus. Wegen des hohen Erweichungspunktes des Polyamids von 212 °C ist auch eine gute Versiegelbarkeit auf handelsüblichen Verpackungsmaschinen gewährleistet.

*Beispiel 7*

Beispiel 6 wird wiederholt mit dem Unterschied, dass anstelle des Gemisches von Polyaminopolycyclohexylmethanverbindungen A als Aminkomponente das Gemisch von Polyaminopolycyclohexylmethanverbindungen B eingesetzt wird (Zusammensetzung s. Beispiel 5).

Die rel. Viskosität des bis zu Schichtdicken von ca. 100 µm transparenten Polyamids beträgt 3,6.

Das Produkt lässt sich, wie in Beispiel 6 beschrieben, ebenfalls zu hochwertigen transparenten Verbundfolien verarbeiten.

*Vergleichsversuch B*

Beispiel 6 wird wiederholt mit dem Unterschied, dass anstelle des Gemisches von Polyaminopolycyclohexylmethanverbindungen A als Aminkomponente 4,4'-Diaminodicyclohexylmethan (Stereoisomerengemisch mit einem Schmelzpunkt von ca. 35 °C) eingesetzt wird. Man erhält ein Produkt, das nach Extraktion und Trocknung eine rel. Viskosität von 3,1 hat.

Aus dem erhaltenen Polyamid hergestellte Folien sind schon bei einer Schichtdicke von 50 µm opak und neigen stark zur Nachkristallisation.

## Patentansprüche

1. Transparente Copolyamide erhalten durch Polykondensation von

I. 10 bis 98 Gew.-% eines Lactams mit wenigstens 5 C-Atomen im Ring bzw. einer entsprechenden Aminocarbonsäure, und

II. 2 bis 90 Gew.-% äquivalenter Mengen

a) einer aliphat. Dicarbonsäure mit $C_2$ bis $C_{20}$ und/oder einer aromat. Dicarbonsäure mit $C_8$ bis $C_{20}$, und

b) eines Gemisches von Polyaminopolycyclohexylmethanverbindungen, das sich zusammensetzt aus

α) 75 bis 95 Mol-% 4,4'-Diaminodicyclohexylmethanen,

β) 5 bis 25 Mol-% 2,4'-Diaminodicyclohexylmethanen,

γ) 0 bis 2 Mol-% 2,2'-Diaminodicyclohexylmethan, und

δ) 0 bis 10 Mol-% von Triaminen der allgemeinen Formel (A)

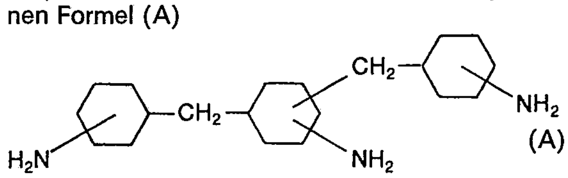

(A)

wobei das Polyamino/Polycyclohexylmethan-Gemisch bis zu 20 Gew.-% durch aliphat. Diamine mit $C_2$ bis $C_{20}$ durch cycloaliphat. Diamine mit $C_6$ bis $C_{15}$, die von den Diaminen der Komponenten (II b) verschieden sind, oder durch araliphat. Diamine mit $C_7$ bis $C_{20}$ ersetzt werden kann und wobei die Summe aus (I) und (II) immer 100

Gew.-% und die Summe aus (α bis δ) immer 100 Mol-% sein muss.

2. Copolyamide gemäss Anspruch 1, dadurch gekennzeichnet, dass sie durch Polykondensation von 30 bis 45 Gew.-% der Komponente (I) und 70 bis 55 Gew.-% der Komponente (II) erhalten werden.

3. Copolyamide gemäss den Ansprüchen 1 und 2, dadurch gekennzeichnet, dass sie durch Polykondensation von 60 bis 98 Gew.-% der Komponente I und 40 bis 2 Gew.-% der Komponente II erhalten wurden.

4. Copolyamide gemäss den Ansprüchen 1 bis 3, dadurch gekennzeichnet, dass die Komponente (II δ) im wesentlichen 2,4-Bis-(4-aminocyclohexylmethyl)cyclohexylamin ist.

5. Copolyamide gemäss den Ansprüchen 1 bis 4, dadurch gekennzeichnet, dass sich das Amingemisch (II b) aus
75 bis 95 Mol-% der Komponente α,
5 bis 25 Mol-% der Komponente β,
0 bis 1 Mol-% der Komponente γ, und
0 bis 5 Mol-% der Komponente δ
zusammensetzt.

6. Copolyamide gemäss den Ansprüchen 1 bis 5, dadurch gekennzeichnet, dass als Lactam ε-Caprolactam verwendet wird.

7. Copolyamide gemäss den Ansprüchen 1 bis 6, dadurch gekennzeichnet, dass als Dicarbonsäure Adipinsäure oder Azelainsäure und/oder Isophthalsäure oder Terephthalsäure verwendet wird.

8. Verwendung der Copolyamide gemäss den Ansprüchen 1 bis 7 zur Herstellung transparenter Formkörper.

9. Folien oder Angeldrähte aus Copolyamiden gemäss den Ansprüchen 1 bis 7.

## Claims

1. Transparent copolyamides obtained by polycondensing of

(I) 10 to 98% by weight of a lactam containing at least 5 C atoms in the ring or a corresponding aminocarboxylic acid,

(II) 2 to 90% by weight of equivalent quantities

(*a*) of an aliphatic dicarboxylic acid containing $C_2$ to $C_{20}$ and/or of an aromatic dicarboxylic acid containing $C_8$ to $C_{20}$, and

(*b*) of a mixture of polyaminopolycyclohexyl methane compounds which is composed of

(*α*) 75 to 95 mol-% of 4,4′-diaminodicyclohexyl methanes,

(*β*) 5 to 25 mol-% of 2,4′-diaminodicyclohexyl methanes,

(*γ*) 0 to 2 mol-% of 2,2′-diaminodicyclohexyl methane, and

(*δ*) 0 to 10 mol-% of triamines of the general Formula (A):

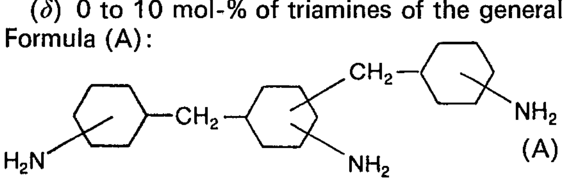
(A)

wherein up to 20% by weight of the polyaminopolycyclohexyl methane mixture can be replaced by aliphatic diamines containing $C_2$ to $C_{20}$, by cycloaliphatic diamines containing $C_6$ to $C_{15}$ which are different from the diamines of components (II*b*), or by araliphatic diamines containing $C_7$ to $C_{20}$, and
wherein the sum of (I) and (II) must always be 100% by weight and the sum of (*a*) to (*δ*) must always be 100 mol-%.

2. Copolyamides according to Claim 1, characterised in that they are obtained by polycondensing
30 to 45% by weight of component (I), and
70 to 55% by weight of component (II).

3. Copolyamides according to Claims 1 and 2, characterised in that they are obtained by polycondensing
60 to 98% by weight of component (I), and
40 to 2% by weight of component (II).

4. Copolyamides according to Claims 1 to 3, characterised in that component (II*δ*) consists mainly of 2,4-bis-(4-aminocyclohexylmethyl)-cyclohexylamine.

5. Copolyamides according to Claims 1 to 4, characterised in that the amine mixture (II*b*) is composed of
75 to 95 mol-% of component (*a*),
5 to 25 mol-% of component (*β*),
0 to 1 mol-% of component (*γ*), and of
0 to 5 mol-% of component (*δ*).

6. Copolyamides according to Claims 1 to 5, characterised in that the lactam used is ε-caprolactam.

7. Copolyamides according to Claims 1 to 6, characterised in that the dicarboxylic acid used is adipic acid or azelaic acid and/or isophthalic acid or terephthalic acid.

8. Use of the copolyamides according to Claims 1 to 7 for the production of transparent shaped articles.

9. Films or fishing lines produced from copolyamides according to Claims 1 to 7.

## Revendications

1. Copolyamides transparents obtenus par polycondensation de

(I) 10 à 98% en poids d'un lactame ayant au moins 5 atomes de carbone dans le noyau ou d'un acide aminocarboxylique correspondant, et de

(II) 2 à 90% en poids de quantités équivalentes

a) d'un acide dicarboxylique aliphatique en $C_2$ à $C_{20}$ et/ou d'un acide dicarboxylique aromatique en $C_8$ à $C_{20}$, et

b) d'un mélange de polyaminopolycyclohexylméthanes, qui se compose de

α) 75 à 95 mol-% de 4,4′-diaminodicyclohexylméthanes,

β) 5 à 25 mol-% de 2,4′-diaminodicyclohexylméthanes,

γ) 0 à 2 mol-% de 2,2′-diaminodicyclohexylméthane, et de

δ) 0 à 10 mol-% de triamines de formule générale (A):

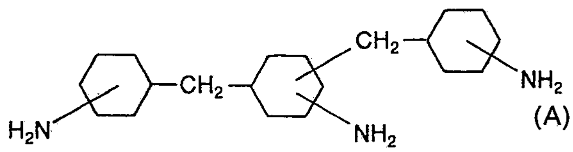

(A)

le mélange de polyaminopolycyclohexylméthanes pouvant être remplacé jusqu'à 20% en poids par des diamines aliphatiques en $C_2$ à $C_{20}$, par des diamines cycloaliphatiques en $C_6$ à $C_{15}$ qui sont différentes des diamines des composants (IIb) ou par des diamines araliphatiques en $C_7$ à $C_{20}$, la somme de (I) et (II) devant toujours être égale à 100% en poids et la somme de (α) à (δ) devant toujours être égale à 100 mol-%.

2. Copolyamides suivant la revendication 1, caractérisés en ce qu'ils sont obtenus par polycondensation de
30 à 45% en poids du composant (I), et de
70 à 55% en poids du composant (II).

3. Copolyamides suivant les revendications 1 et 2, caractérisés en ce qu'ils ont été obtenus par polycondensation de
60 à 98% en poids du composant (I), et de
40 à 2% en poids du composant (II).

4. Copolyamides suivant les revendications 1 à 3, caractérisés en ce que le composant (IIδ) est principalement la 2,4-bis-(4-aminocyclohexylméthyl)cyclohexylamine.

5. Copolyamides suivant les revendications 1 à 4, caractérisés en ce que le mélange d'amines (IIb) se compose de
75 à 95 mol-% du composant (α),
5 à 25 mol-% du composant (β),
0 à 5 mol-% du composant (δ).

6. Copolyamides suivant les revendications 1 à 5, caractérisés en ce qu'on utilise comme lactame l'ε-caprolactame.

7. Copolyamides suivant les revendications 1 à 6, caractérisés en ce qu'on utilise, comme acide dicarboxylique, l'acide adipique ou l'acide azélaïque et/ou l'acide isophtalique ou l'acide téréphtalique.

8. Utilisation des copolyamides suivant les revendications 1 à 7 pour la production de pièces moulées transparentes.

9. Feuilles ou lignes pour la pêche, en copolyamides suivant les revendications 1 à 7.